# EUROPÄISCHE PATENTSCHRIFT

(11) **EP 1 055 449 B1**
(45) Veröffentlichungstag und Bekanntmachung des Hinweises auf die Patenterteilung: **21.06.2006**
(21) Anmeldenummer: 00110872.9
(22) Anmeldetag: 23.05.2000
(51) Int. Cl.: B01D 53/94, F01N 11/00, F01N 3/20

(54) **Verfahren zur Überwachung der Funktion eines Systems zur Abgasnachbehandlung**
Process for monitoring the performance of an exhaust gas treatment system
Procédé de surveillance du fonctionnement d'un système de traitement des gaz d'échappement

(30) Priorität: 26.05.1999 DE 19924029
(43) Veröffentlichungstag der Anmeldung: 29.11.2000
(73) Patentinhaber: Dr.Ing. h.c.F. Porsche Aktiengesellschaft, 70435 Stuttgart (DE); AUDI AG, D-7107 Neckarsulm (DE); Bayerische Motoren Werke Aktiengesellschaft, 80788 München (DE); DaimlerChrysler AG, 70567 Stuttgart (DE); Volkswagen AG, 38436 Wolfsburg (DE)
(72) Erfinder: Küper, Paul, 75446 Wiernsheim (DE); Müller, Jens, 71277 Rutesheim (DE); Goerigk, Christian, 71282 Hemmingen (DE); Illek, Michael, 70193 Stuttgart (DE); Peter, Stefan Dietrich, 64823 Gross-Umstadt (DE); Wessels, Stefan, 71287 Weissach-Flacht (DE)

(56) Entgegenhaltungen:
- EP-A- 0 236 659
- DE-A- 4 402 850
- DE-C- 19 629 163
- US-A- 5 592 815

## Beschreibung

Die Erfindung betrifft die Abgasnachbehandlung in Brennkraftmaschinen. Die Problematik der Abgasnachbehandlung ist bereits in einem umfassenden Überblick im Bosch/Kraftfahrtechnisches Taschenbuch 22. Auflage (ISBN 3-18-419122-2) in dem Kapitel "Abgase von Ottomotoren" (S.486ff) erläutert. Bei der Verbrennung des Kraftstoff-Luftgemisches in Brennkraftmaschinen entstehen eine Reihe von Verbrennungsprodukten. So entstehen neben den ungiftigen Hauptbestandteilen Stickstoff, Kohlendioxid und Wasserdampf des Abgases eine Reihe von weniger verträglichen Nebenbestandteilen. Als Nebenbestandteil sind im Abgas unter anderem Kohlenmonoxid (CO), Stickstoffmonoxid (NO), Stickstoffdioxid (NO₂), Kohlenwasserstoffe (HC) und Feststoffe enthalten. Das Stickstoffmonoxid ist farb-, geruchs- und geschmacklos und wandelt sich in der Luft langsam in NO₂ um. Dieses NO₂ ist in reiner Form ein stechend riechendes, giftiges Gas, so daß es bei höherer Konzentration die Schleimhäute reizen kann. NO und NO₂ werden üblicherweise zusammenfassend als Stickoxide NOx bezeichnet. Kohlenwasserstoffe sind in großer Vielfalt im Abgas enthalten und bilden in Anwesenheit von Stickoxid und Sonnenlicht Oxidanten. Dieses Abgasgemisch gelangt in den Abgasstrang, wo es in der Regel zunächst in einen Oxidationskatalysator eingeleitet wird, welcher die Kohlenwasserstoffe zu Kohlendioxid und Wasser und das Kohlenmonoxid zu Kohlendioxid aufoxidiert. Gleichzeitig wird auch Stickstoffmonoxid NO zu Stickstoffdioxid aufoxidiert wird.

Zur Verminderung insbesondere schädlicher Anteile in dem Abgas sind eine Reihe von Maßnahmen zur Beeinflussung der Abgaszusammensetzung bekannt, wobei sich diese Maßnahmen im wesentlichen in motorische Maßnahmen und Abgasnachbehandlungsmaßnahmen einteilen lassen. Da die vorliegende Erfindung sich auf die Maßnahmen zur Nachbehandlung bezieht, sollen die motorischen Maßnahmen hier nicht weiter erläutert werden. Zu den Möglichkeiten der Abgasnachbehandlung zählen die thermische Nachverbrennung und die katalytische Nachverbrennung. Die bei der katalytischen Nachverbrennung eingesetzten Katalysatoren bestehen üblicherweise aus einem Trägermaterial mit aktiver Beschichtung, welche die chemische Umsetzung insbesondere der schädlichen Bestandteile des Abgases begünstigt. Alternativ können auch sogenannte Vollextrudationskatalysatoren eingesetzt werden. Da der Wirkungsgrad des Katalysators im wesentlichen von seiner Betriebstemperatur abhängt, werden Katalysatoren gern in Motornähe eingebaut, da so die Zeit bis zum Erreichen der Betriebstemperatur verkürzt ist, wodurch schnell ein optimaler Wirkungsgrad erreicht wird. Gleichzeitig hat der motornahe Einbau aber auch den Nachteil einer hohen thermischen Belastung des Katalysators. Fehlfunktionen des Motors wie beispielsweise Zündaussetzer beim Ottomotor können die Temperatur des Katalysators aufgrund der im Katalysator stattfindenden Umsetzung des nichtverbrannten Kraftstoffes so hoch ansteigen lassen, daß er durch Schmelzen des Trägermaterials zerstört wird. Dies wird in der Regel durch den Einsatz zuverlässiger und wartungsfreier Zündsysteme verhindert.

Bekannt ist der Einsatz von Oxidationskatalysatoren, die im wesentlichen das Kohlenmonoxid CO und die Kohlenwasserstoffe HC oxidieren. Sie werden entweder durch mageren Motorbetrieb oder durch zusätzliche Lufteinblasung mit Luftüberschuß oder im überstöchiometrischen Dieselabgas so betrieben, daß Kohlenmonoxid und die HC-Bestandteile oxidiert werden. Es sind weiterhin Reduktionskatalysatoren bekannt, die die Stickoxide im Abgas reduzieren. Die Reihenschaltung von Oxidations- und Reduktionskatalysator mit einer Lufteinblasung zwischen beiden Katalysatoren hat den Vorteil, daß so sowohl NOx als auch HC und CO abgebaut werden können.

Das Funktionsprinzip und die Arbeitsweise eines Reduktionsmittelkatalysators, sowie ein Verfahren und eine Einrichtung zur Dosierung eines Reduktionsmittels in ein stickoxidhaltiges Abgas zur Reduzierung dieser Bestandteile im nachgeordneten Reduktionskatalysator sind bereits aus der DE 43 15 278 A1 bekannt, so daß dies hier nicht im einzelnen erläutert werden soll.

Das erfindungsgemäße Verfahren zur Überwachung der Funktion eines Systems zur Abgasnachbehandlung mit den Merkmalen des Hauptanspruchs hat gegenüber dem Bekannten den Vorteil, daß bei der Verwendung einer Reihenschaltung aus Oxidationskatalysator und Reduktionskatalysator im Abgasstrang die Funktion und damit die Zuverlässigkeit jedes Katalysators für sich oder beide in Kombination überwacht werden können. Die Funktion des Oxidationskatalysators wird durch eine übermäßige thermische Beanspruchung bei zu hohen Abgastemperaturen bleibend beeinträchtigt, es tritt eine thermische Alterung ein. Ausschlaggebend für das Ausmaß der Alterung sind die Häufigkeit und die Höhe der kritischen Temperaturen oberhalb eines Referenzwertes. Durch Aufsummierung der Temperaturen oberhalb des Referenzwertes wird eine Aussage zur thermischen Belastung des Oxidationskatalysators getroffen. Der Vergleich der so gebildeten Summe mit einem vorgebbaren Grenzwert, bei dessen Überschreitung eine Fehleranzeige erfolgt, ermöglicht es sehr schnell, den Fahrer optisch und/oder akustisch über den kritischen Zustand des Oxidationskatalysators zu informieren. Die Überprüfung des Reduktionskatalysators durch Erfassung der Stickoxid- (NOx) oder Ammoniak- (NH3) Werte nach dem Katalysator ermöglicht eine differenzierte Aussage über die Funktionsfähigkeit dieses Reduktionskatalysators oder der Reduktionsmitteldosiereinrichtung.

Durch die in den abhängigen Ansprüchen aufgeführten Maßnahmen sind weitere vorteilhafte Ausgestaltungen des erfindungsgemäßen Verfahrens möglich.

Das Vorsehen von zwei Temperatursensoren, wobei ein Temperatursensor vor dem Oxidationskatalysator und ein Temperatursensor nach dem Oxidationskatalysator angeordnet ist, hat den Vorteil, daß aufgrund des Vergleiches der Temperaturen vor und nach dem Oxidationskatalysator eine wesentlich genauere Aussage über die tatsächliche Temperatur im Oxidationskatalysator (Oxi-Kat) gemacht werden kann. Da jeder Temperatursensor auch für sich alleine ausgewertet werden kann, ist die Überwachung der Funktionstüchtigkeit des Oxidationskatalysators auch bei Ausfall eines Temperatursensors weiterhin gewährleistet.

Die Erfassung der NOx-Konzentration oder der NOx- und NH₃-Konzentration im Abgas nach dem Reduktionsmittelkatalysator und der Vergleich der NOx-Konzentration an einem definierten Betriebspunkt der Brennkraftmaschine mit einem abgespeicherten Kontrollwert des NOx-Gehaltes hat den Vorteil, daß sehr schnell eine Aussage über die Abgaszusammensetzung möglich ist und bei Erkennen eines Anstiegs des NOx-Konzentration eine Fehlermeldung für den Fahrer erfolgt.

Als Fehlermeldung für den Fahrer kann vorzugsweise im Kombiinstrument eine optische und/oder akustische Information vorgesehen werden. Gleichzeitig kann ein entsprechender Fehlereintrag im Steuergerät erfolgen, welches dann in der Werkstatt ausgelesen werden kann. Hier kann eine detailliertere Information, wie beispielsweise welcher Katalysator die Fehlermeldung bewirkt hat oder wie hoch die maximale Temperatur im Oxikat oder die NOx-bzw. NH₃-Konzentration nach dem Reduktionskatalysator war, abgespeichert werden.

Ausführungsbeispiele der Erfindung sind in der Zeichnung dargestellt und in der nachfolgenden Beschreibung näher erläutert. Es zeigen:
Fig. 1 einen Prinzipaufbau eines Abgasnachbehandlungsstranges mit Oxidationskatalysator (Oxi-Kat) und Reduktionskatalysator,
Fig. 2 einen Programmablaufplan zur Ermittlung einer Fehlfunktion des Oxi-Kat mit einem Temperatursensor,
Fig. 3 einen Programmablaufplan zur Ermittlung einer Fehlfunktion des Oxi-Kat mit zwei Temperatursensoren und
Fig. 4 einen Programmablaufplan zur Ermittlung einer Fehlfunktion des Reduktionskatalysators.

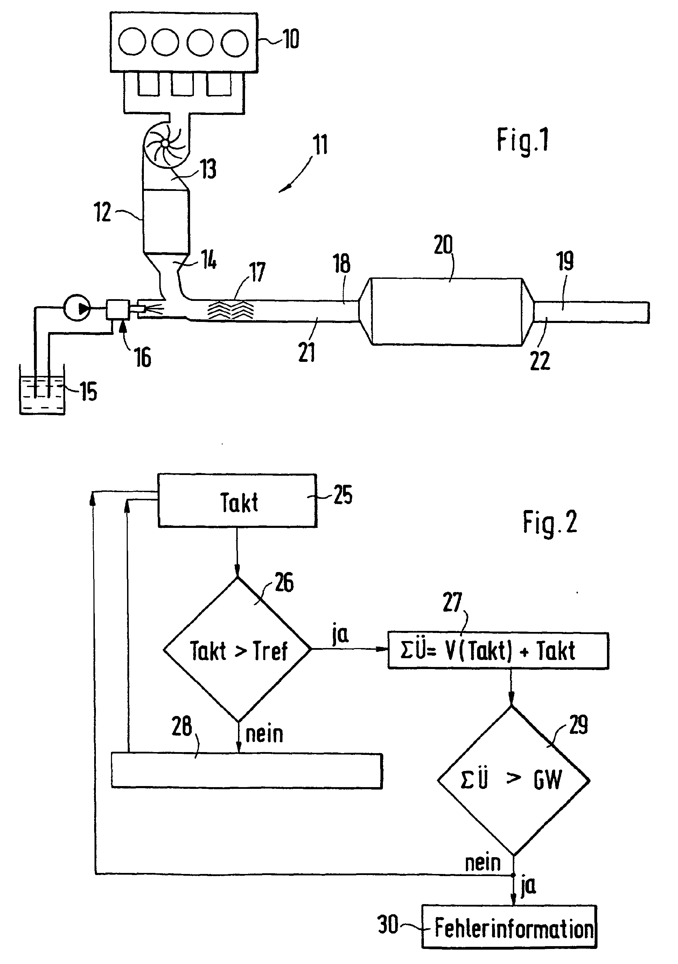

Fig. 1 zeigt das Prinzipschaltbild des Abgangsstranges einer Brennkraftmaschine. Mit dem Bezugszeichen 10 ist der Motorblock dargestellt. Das bei der Verbrennung in den einzelnen Zylindern des Motorblockes 10 entstehende Abgas wird über den Abgasstrang 11 abgeleitet. Im Abgasstrang 11 befindet sich in unmittelbarer Nähe zum Motorblock 10 ein Oxidationskatalysator (Oxi-Kat) 12, wobei ein erster Temperatursensor 13 im Abgasstrang 11 vor dem Oxidationskatalysator 12 angeordnet ist und die Temperatur Takt-v vor dem Oxidationskatalysator 12 erfaßt und wobei ein zweiter Temperatursensor 14 im Abgasstrang 11 nach dem Oxidationskatalysator die Temperatur Takt-n nach dem Oxidationskatalysator 12 erfaßt. In Reihenschaltung zu dem Oxidationskatalysator 12 befindet sich ein Reduktionskatalysator 20, wobei vor dem Reduktionskatalysator ein Temperatursensor 18 und nach dem Reduktionskatalysator ein Temperatursensor 19 angeordnet ist. Ebenfalls vor dem Reduktionskatalysator 20 ist ein erster Abgassensor 21 zur Erfassung der Rohemission der Stickoxide E-NOx angeordnet. Ein zweiter Abgassensor 22 ist im Abgasstrang nach dem Reduktionskatalysator angeordnet und erfaßt die NOx- bzw. NOx/NH3-Konzentration des Abgases. Dem Abgasstrang 11 ist ferner ein Reduktionsmittelbehälter 15 zugeordnet, welcher über eine Reduktionsmittelzugabe 16, die im Abgasstrang 11 zwischen dem Oxidationskatalysator 12 und dem Reduktionskatalysator 20 angeordnet ist, dem Abgas gezielt Reduktionsmittel zusetzt. Ein Mischer 17 im Abgasstrang 11 sorgt für eine homogene Mischung des Abgases mit dem Reduktionsmittel 15.

Bevor im folgenden auf das erfindungsgemäße Verfahren eingegangen werden soll, ist noch auszuführen, daß die eigentliche Verbrennung einen wesentlichen Einfluß auf die Zusammensetzung des Abgases hat. Solche motorischen Maßnahmen, die einen Einfluß auf den Verbrennungsverlauf und damit auf die Abgaszusammensetzung haben, sind beim Ottomotor die Gemischeinstellung, die Gemischaufbereitung, die Gleichverteilung, die Abgasrückführung, die Ansteuerung der Ventile, das Verdichtungsverhältnis, die Brennraumgestaltung, das Zündsystem selbst und beispielsweise die Kurbelgehäuseentlüftung und beim Dieselmotor die gezielte Gestaltung der Turbulenzen der Brennraumladung, die Geometrie des Brennraumes, die zeitgerechte Einbringung des Kraftstoffes und die Regelung des Einspritzzeitpunktes, die optimale Zerstäubung des Kraftstoffes und die Geometrie der Einspritzdüsen, die Regelung des Luftüberschusses im Brennraum über variable Aufladung sowei die Regelung der Abgasrückführung. Diese Maßnahmen sollen nicht weiter erläutert werden. Wesentlich ist jedoch, daß keine dieser Maßnahmen für sich alleine ein optimales Ergebnis erzielt, sondern alle zu ergreifenden Maßnahmen für ein möglichst schadstofffreies Abgas aufeinander eingestellt werden müssen.

Es soll nun anhand von Fig. 2 die Überwachung des Oxidationskatalysators mit einem einzelnen Temperatursensor, wobei dieser entweder vor oder nach dem Oxidationskatalysator angeordnet sein kann, erläutert werden. In einem ersten Arbeitsschritt 25 wird die aktuelle Temperatur Takt erfaßt, wobei hier entweder die Temperatur des Temperatursensors 13 oder die Temperatur des Temperatursensors 14 vor bzw. nach dem Oxidationskatalysator ermittelt wird. Diese erfaßte aktuelle Temperatur Takt wird anschließend in einer Abfrage 26 mit einem vorgebbaren Referenzwert Tref verglichen (Takt > Tref), wobei dieser vorgebbare Refernzwert Tref ggf. mit Motorbetriebsgrößen und Wichtungsfaktoren beauschlagt wird, so kann beispielsweise bei höherem Abgasdurchsatz eine stärkere Wichtung der kritischen Temperatur Tref erfolgen. Ist der aktuelle Temperaturwert größer als der vorgebbare Temperaturreferenzwert (Takt > Tref), so führt der Ja-Ausgang der Abfrage 26 an einen Arbeitsschritt 27. Der Nein-Ausgang der Abfrage 26, d.h. der aktuelle gemessene Temperaturwert Takt liegt unter dem vorgebbaren Referenzwert Tref der Abgastemperatur, führt an einen Arbeitsschritt 28, in welchem der zuletzt gemessene aktuelle Temperaturwert Takt gelöscht wird. Anschließend wird im Arbeitsschritt 25 der nächste aktuelle Temperaturwert Takt erfaßt. Hatte der aktuell erfaßte Temperaturwert Takt den vorgebbaren Refernezwert überschritten, so wird im Arbeitsschritt 27 dieser aktuell erfaßte Temperaturwert (Takt) auf die bereits in der Vergangenheit erfaßten Temperaturwerte V(Takt), die oberhalb des Referenzwertes lagen, hinzuaddiert und aus all diesen Werten eine Summe aller Überschreitungen Ü gebildet. In einer anschließenden Abfrage 29 wird geprüft, ob die berechnete Summe ΣÜ größer ist als ein vorgebbarer Grenzwert GW für die Fehleranzeige. Wurde die Abfrage 29 ΣÜ > GW verneint, so führt der Nein-Ausgang zurück an den Anfang des Verfahrens zum Schritt 25, und es wird der nächste Temperaturwert erfaßt. Wurde die Abfrage 29 dagegen bejaht, das heißt die gebildete Summe ΣÜ ist größer als der zulässige Grenzwert GW, dann erfolgt im Arbeitsschritt 30 eine Fehlerinformation. Diese Fehlerinformation kann optisch und/oder akustisch erfolgen. Vorteilhafterweise kann eine entsprechende Fehlerinformation auch im Speicher abgelegt werden, so daß dann bei einem Werkstattbesuch ggf. genauere Daten über den aufgetretenen Fehler ausgelesen werden können. Denkbar ist hierbei beispielsweise, gleichzeitig den Betriebspunkt abzuspeichern, bei dem die erhöhte Temperatur gemessen wurde.

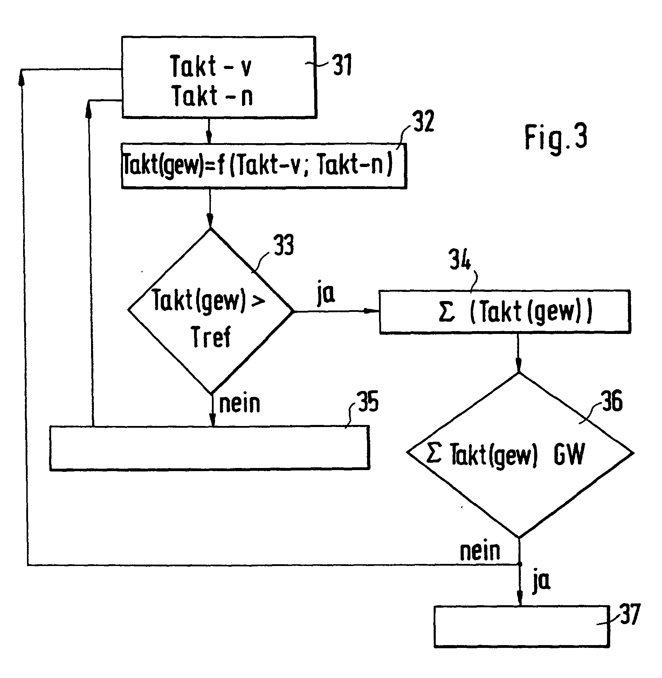

Fig. 3 zeigt das Verfahren zur Überprüfung des Oxidationskatalysators unter Ausnutzung der gemessenen aktuellen Temperaturwerte von zwei Temperatursensoren, wobei ein erster Temperatursensor 13 im Abgasstrang 11 vor dem Oxidationskatalysator und ein zweiter Temperatursensor 14 im Abgasstrang nach dem Oxidationskatalysator angeordnet ist. Der erste Temperatursensor 13 vor dem Oxidationskatalysator berücksichtigt in dem Fall Abgastemperaturen, welche eine thermische Alterung am Katalysator verursachen können, während der Temperatursensor 14 nach dem Oxidationskatalysator ein mögliches Abbrennen von Ruß und/oder eingelagerten Kohlenwasserstoffen im Oxidationskatalysator berücksichtigt. Das Abbrennen dieser Stoffe kann nach längerem Betrieb mit niedrigen Abgastemperaturen, die unterhalb der Arbeitstemperatur des Oxidationskatalysators liegen, durch ein Ansteigen der Abgastemperatur ausgelöst werden. In einem anschließenden Arbeitsschritt 32 wird durch eine Wichtung dieser beiden erfaßten Temperaturen vor und nach Oxidationskatalysator eine Katalysatormitteltemperatur Takt(gew) berechnet; Takt(gew) = f(Takt-v; Takt-n). In der anschließenden Abfrage 33 erfolgt analog zum Arbeitsschritt 26 der Fig. 2 der Vergleich dieser Katmitteltemperatur Takt(gew) mit einer vorgebbaren Referenztemperatur Tref. Auch die weiteren Arbeitsschritte bzw. Abfragen werden analog zu dem Ablaufplan der Fig. 2 durchgeführt und sollen hier nicht nochmals separat erläutert werden. Ein wesentlicher Unterschied dieses Verfahrens nach Fig. 3 zum Verfahren nach Fig. 2 besteht lediglich darin, daß aus den Temperaturen vor und nach dem Oxidationskatalysator ein Wert für die Katalysatormitteltemperatur bestimmt und den weiteren Verfahrensschritten zugrunde gelegt wird. Damit bedeutet das Überschreiten der Referenztemperatur in der Abfrage 33, daß im Arbeitsschritt 34 die Summe der Überschreitungen durch jeweiliges Hinzuaddieren des letzten zu hohen Temperaturwerten gebildet wird, während im anderen Fall der zuletzt bestimmte Wert für die Katalysatormitteltemperatur im Arbeitsschritt 35 gelöscht wird. Die im Arbeitsschritt 34 gebildete Summe Σ (Takt(gew)) wird in der Abfrage 36 mit einem vorgebbaren Grenzwert GW verglichen. Je nach dem Vergleichsergebnis wird dann entweder an den Anfang des Verfahrens gesprungen oder es erfolgt im Arbeitsschritt 37 eine Fehlerinformation.

Die in Figur 1 gezeigt Reduktionsmitteldosiereinheit 16 fügt dem Abgas nach dem Oxidationskatalysator 12 entweder eine wässrige Harnstofflösung, einen festen Harnstoff, ein NH3-haltiges Gas oder eine ammoniakbildende Substanz zu. Bei einem ordnungsgemäßen Betrieb der Brennkraftmaschine und des Reduktionskatalysators ist die Stickoxid-Konzentration in definierten Betriebspunkten BP1 und BP2 bekannt. Über einen Vergleich dieser zu erwartenden Stickoxid-Konzentration und der tatsächlich gemessenen Stickoxid-Konzentration kann bei einer Überschreitung der zu erwartenden Stickoxid-Konzentration eine entsprechende Fehlfunktion erkannt und eine Fehlerinformation ausgegeben werden. Im wesentlichen ist es so, daß ein defekter Reduktionskatalysator bei ordnungsgemäßer Reduktionsmitteldosierung weniger NOx umsetzt, so daß das nicht verbrauchte Reduktionsmittel stärker durchbricht und dann nach dem Reduktionskatalysator in einem höheren Konzentrationsanteil im Abgas vorliegt. Im Gegensatz dazu wird bei einer defekten Reduktionsmitteldosierung das NOx nicht ordnungsgemäß umgesetzt und die NOx-Konzentration im Abgas steigt an.

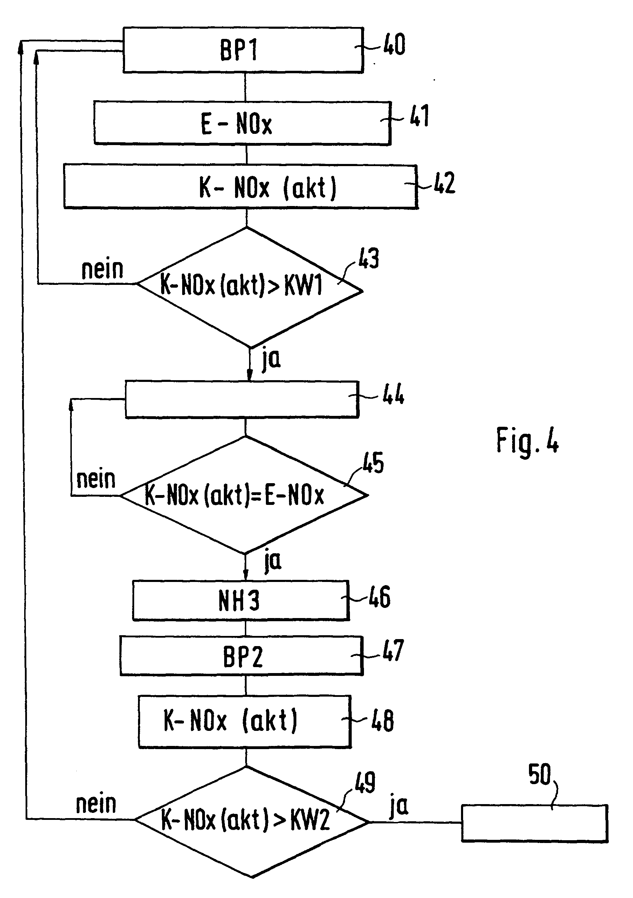

In Fig. 4 ist ein Ablaufplan zur Überprüfung der Funktionsfähigkeit und der Arbeitsweise des Reduktionskatalysators dargestellt. Zunächst wird in einem ersten Arbeitsschritt 40 geprüft, ob ein definierter Betriebspunkt BP1 vorliegt bzw. der aktuelle Betriebspunkt ermittelt. Jedem Betriebspunkt ist eine NOx-Konzentration im Abgas zuordenbar, wobei diese Werte üblicherweise in der Applikation ermittelt werden und in einem Speicher über ein Kennfeld abgelegt sind. Anschließend wird in einem Arbeitsschritt 41 die Rohemission des Motors E-NOx vor dem Reduktionskatalysator erfaßt und in einem weiteren Arbeitsschritt 42 die aktuelle Emission nach dem Reduktionslkatalysator K-NOx(akt) gemessen. In einer Abfrage 43 wird geprüft, ob die NOx-Konzentration im Abgas nach dem Reduktionskatalysator größer als ein vorgebbarer Kontrollwert KW1 ist (K-NOx(akt) > KW1). Ist dies nicht der Fall, so führt der Nein-Ausgang der Abfrage 43 zurück an den Anfang des Verfahrens zum Arbeitsschritt 40. Wurde die Abfrage 43 jedoch mit Ja beantwortet, d.h. der NOx-Gehalt im Abgas ist größer als der vorgebbare Kontrollwert KW1, so wird in einem anschließenden Arbeitsschritt 44 die Zugabe des Reduktionsmittels eingestellt. In der nachfolgenden Abfrage 45 wird geprüft, ob die Stickoxidkonzentration nach dem Reduktionskatalysator K-NOx(akt) annähernd gleich der Rohemission des Motors E-NOx ist. Ist dies nicht der Fall, führt der Nein-Ausgang zurück an den Arbeitsschritt 44, wo die NH3-Dosierung weiterhin eingestellt bleibt. Dies hat zur Folge, daß das Reduktionsmittel im Reduktionskatalysator vollständig abgebaut wird. Wurde die Abfrage 45 bejaht, d.h. die NOx-Konzentrationen vor und nach dem Reduktionskatalysator sind gleich, so wird in einem nachfolgenden Arbeitsschritt 46 die Dosierung des Reduktionsmittels NH3 wiederum aktiviert. In einem anschließenden Arbeitsschritt 47 wird ein definierter Betriebspunkt BP2 abgewartet und dann im Arbeitsschritt 48 erneut die Rohemission von Stickoxid des Motors E-NOx vor dem Reduktionskatalysator und die aktuelle Stickoxidkonzentration nach dem Reduktionsmittelkatalysator K-NOx(akt) gemessen. Für den Fall, daß in einer anschließenden Abfrage 49 die NOx-Konzentration nach dem Reduktionsmittelkatalysator größer ist als ein vorgebbarer Kontrollwert, erfolgt im Arbeitsschritt 50 eine Fehlerinformation. Wurde keine erhöhte NOx-Konzentration ermittelt, so führt der Nein-Ausgang der Abfrage 49 zurück an den Anfang des Verfahrens.

Zusätzlich kann bei Abfrage 45 noch eine Sensorprüfung vorgenommen werden. Bei nicht aktiver NH3-Dosierung ist ein Vergleich der NOx-Sensoren mit im Kennfeld abgelegten Werten möglich. Bei zu großen Abweichungen des vom Sensor gelierferten Wertes vom Kennfeld liegt üblicherweise ein Sensordefekt vor, der so ebenfalls schnell erkannt werden kann. Weiterhin ist eine indirekte Überwachung des Oxikats möglich. So geht bei einem defekten Oxikat bei niedrigen Temperaturen der NOx-Umsatz zurück, obwohl der Reduktionskatalysator nicht gealtert ist, da üblicherweise der Rduktionskatalysator bei tiefen Temperaturen und vorgeschaltetem Oxi-Kat eine höhere Aktivität aufweist.

## Patentansprüche

1. Verfahren zur Überwachung der Funktion eines Systems zur Abgasnachbehandlung mit einem Oxidationskatalysator (12), mit mindestens einer dem Oxidationskatalysator (12) zugeordneten Temperaturerfassungseinrichtung (13;14), mit der die aktuelle Temperatur (Takt) vor und/oder nach dem Oxidationskatalysator (12) erfaßt wird, wobei die erfaßte aktuelle Temperatur (Takt) mit einem vorgebbaren Referenzwert (Tref) verglichen wird und wobei alle aktuell erfaßten Temperaturwerte (Takt), die den vorgebbaren Referenzwert (Tref) überschreiten, aufsummiert werden und diese Summe mit einem vorgebbaren Grenzwert (GW) der Temperaturüberschreitungen verglichen wird, wobei eine Fehlerinformation erfolgt, wenn die Summe den Grenzwert überschreitet, mit einem zum Oxidationskatalysator (12) in Reihe im Abgasstrang nachgeordneten Reduktionskatalysator (20), wobei zwischen dem Oxidationskatalysator und dem Reduktionskatalysator eine Reduktionsmitteldosiereinrichrichtung angeordnet ist, die dem Abgas eine definierte Menge Reduktionsmittel zusetzt, und einem nach dem Reduktionskatalysator (20) angeordneten Abgassensor (22) zur Erfassung der aktuellen Stickoxid-Konzentration (K-NOx(akt)) im Abgas, wobei die aktuelle Stickoxid-Konzentration (K-NOx(akt)) mit einem vorgebbaren ersten bzw. zweiten zulässigen Kontrollwert (KW1, KW2) für die Stickoxid-Konzentration im Abgas verglichen wird und wobei in Abhängigkeit des Vergleichsergebnisses eine Fehlerinformation erfolgt.

2. Verfahren nach Anspruch 1, **dadurch gekennzeichnet, daß** bei einer aktuellen Stickoxid-Konzentration (K-NOx(akt)) im Abgas nach dem Reduktionskatalysator (20), die größer als der erste Kontrollwert (KW1) ist, die Zugabe von Reduktionsmittel zum Abgas solange eingestellt wird, bis im Reduktionskatalysator (20) kein Reduktionsmittel mehr gespeichert ist und daß anschließend eine definierte Zugabe von Reduktionmittel erfolgt, wobei das Reduktionsmittel so dosiert ist, daß das beim aktuellen Betriebspunkt zu erwartende NOx im Reduktionskatalysator annähernd vollständig umgesetzt wird und daß bei einer weiterhin erhöhten Stickoxid-Konzentration nach dem Reduktionskatalysator (K-NOx(akt)) dieser als fehlerhaft arbeitend erkannt wird und daß bei einer erhöhten NH3-Konzentration die Reduktionsmitteldosiereinrichtung (16) als fehlerhaft arbeitend erkannt wird.

3. Verfahren nach Anspruch 1 oder 2, **dadurch gekennzeichnet, daß** die mindestens eine Temperaturerfassungseinrichtung die Abgastemperatur vor dem Oxidationskatalysator (Takt-v) und daß eine zweite Temperaturerfassungseinrichtung die Temperatur nach dem Oxidationskatalysator (Takt-n) erfaßt.

4. Verfahren nach Anspruch 3, **dadurch gekennzeichnet, daß** aus den erfaßten Temperaturen vor und nach dem Oxidationskatalysator eine Katalysatormitteltemperatur (Takt(gew)) des Oxidationskatalysators bestimmt wird.

5. Verfahren nach einem der vorherigen Ansprüche, **dadurch gekennzeichnet, daß** die vorgebbare Referenztemperatur (Tref) in Abhängigkeit des Betriebspunktes festgelegt wird.

6. Verfahren nach einem der vorherigen Ansprüche, **dadurch gekennzeichnet, daß** der erste Kontrollwert (KW1) und der zweite Kontrollwert (KW2) den gleichen Wert oder verschiedene Werte annehmen können.

7. Verfahren nach einem der vorherigen Ansprüche, **dadurch gekennzeichnet, daß** der die beiden Betriebspunkte (BP1 und BP2) den gleichen und verschieden Betriebsbereiche der Brennkraftmaschine definieren können.

## Claims

1. A process for monitoring the performance of a system for exhaust-gas after-treatment with an oxidation catalytic converter (12), with at least one temperature-detection device (13; 14) which is associated with the oxidation catalytic converter (12) and by which the current temperature (**T**_{**akt**}) is detected upstream and/or downstream of the oxidation catalytic converter (12), wherein the current temperature (**T**_{**akt**}) detected is compared with a pre-determinable reference value (**T**_{**ref**}) and wherein all the currently detected temperature values (**T**_{**akt**}) which exceed the pre-determinable reference value (**T**_{**ref**}) are totalled and this total is compared with a pre-determinable limit value (GW) of the instances of exceeding the temperature, wherein an error message occurs when the sum exceeds the limit value, with a reduction catalytic converter (20) arranged downstream in series with respect to the oxidation catalytic converter (12) in the exhaust-gas line, wherein a reducing-agent metering device, which adds a defined quantity of reducing agent to the exhaust gas, is arranged between the oxidation catalytic converter and the reduction catalytic converter, and with an exhaust-gas sensor (22) arranged downstream of the reduction catalytic converter (20) for detecting the current concentration of nitrogen oxide (**K-NO**_{**x(akt)**}) in the exhaust gas, wherein the current concentration of nitrogen oxide (**K-NO**_{**x(akt)**}) is compared with a pre-determinable first or second permissible control value (**KW1, KW2**) respectively for the concentration of nitrogen oxide in the exhaust gas and wherein an error message occurs in a manner dependent upon the comparison result.

2. A process according to Claim 1, **characterized in that** in the event of a current concentration of nitrogen oxide (**K-NO**_{**x(akt)**}) in the exhaust gas downstream of the reduction catalytic converter (20), which concentration is higher than the first control value (**KW1**), the addition of reducing agent to the exhaust gas is discontinued until reducing agent is no longer stored in the reduction catalytic converter (20), and after that a defined addition of reducing agent takes place, wherein the reducing agent is metered in such a way that the NOₓ to be expected at the current operating point in the reduction catalytic converter is converted substantially completely, and in the event of a further increased concentration of nitrogen oxide downstream of the reduction catalytic converter (**K-NO**_{**x(akt)**}) the said reduction catalytic converter is recognized as operating in a defective manner, and in the event of an increased NH₃ concentration the reducing-agent metering device (16) is recognized as operating in a defective manner.

3. A process according to Claim 1 or 2, **characterized in that** the at least one temperature-detection device detects the exhaust-gas temperature upstream of the oxidation catalytic converter (**T**_{**akt-v**}), and a second temperature-detection device detects the temperature downstream of the oxidation catalytic converter (**T**_{**akt-n**}).

4. A process according to Claim 3, **characterized in that** a mean temperature (**T**_{**akt(gew)**}) of the oxidation catalytic converter is determined from the temperatures detected upstream and downstream of the oxidation catalytic converter.

5. A process according to any one of the preceding Claims, **characterized in that** the pre-determinable reference temperature (**T**_{**ref**}) is set in a manner dependent upon the operating point.

6. A process according to any one of the preceding Claims, **characterized in that** the first control value (KW1) and the second control value (KW2) can assume the same value or different values.

7. A process according to any one of the preceding Claims, **characterized in that** the two operating points (**BP1** and **BP2**) can define the same and different operating ranges of the internal-combustion engine.

## Revendications

1. Procédé de surveillance du fonctionnement d'un système de traitement ultérieur des gaz d'échappement avec un catalyseur d'oxydation (12), avec au moins un système de saisie de la température (13 ; 14), avec lequel la température momentanée (Takt) en amont et/ou en aval du catalyseur d'oxydation (12) est saisie, dans lequel la température momentanée saisie (Takt) est comparée à une valeur de référence spécifiable (Tref) et dans lequel toutes les valeurs de température momentanément saisies (Takt) qui dépassent la valeur de référence spécifiable (Tref) sont totalisées et dans lequel ce total est comparé à une valeur limite spécifiable (GW) des dépassements de température, sachant qu'une information de défaut s'effectue quand la somme dépasse la valeur limite, avec un catalyseur de réduction (20) disposé en série en aval du catalyseur d'oxydation (12), sachant qu'un dispositif de dosage d'agent de réduction est disposé entre le catalyseur d'oxydation et le catalyseur de réduction, dispositif qui ajoute au gaz d'échappement une quantité définie d'agent de réduction, et un capteur de gaz d'échappement (22) pour la saisie de la concentration momentanée d'oxydes d'azote (K-NOx(akt)) dans le gaz d'échappement, disposé en aval du catalyseur de réduction (20), sachant que la concentration momentanée d'oxydes d'azote (K-NOx(akt)) est comparée à une première, respectivement à une deuxième valeur de contrôle spécifiables (KW1, KW2) pour la concentration d'oxydes d'azote dans le gaz d'échappement et sachant qu'une information de défaut s'effectue en fonction du résultat de la comparaison.

2. Procédé selon la revendication 1, **caractérisé en ce que**, pour une concentration momentanée d'oxydes d'azote (K-NOx(akt)) dans le gaz d'échappement en aval du catalyseur de réduction (20) qui est plus grande que la première valeur de contrôle (KW1), l'addition de l'agent de réduction au gaz d'échappement est interrompue jusqu'à ce qu'il n'y ait plus d'agent de réduction emmagasiné dans le catalyseur de réduction (20) et **en ce qu'**il s'effectue ensuite une addition définie d'agent de réduction, lors de quoi l'agent de réduction est dosé de telle sorte que le NOx prévisible au point de fonctionnement momentané soit à peu près totalement converti dans le catalyseur de réduction et que, dans le cas d'une concentration restante d'oxydes d'azote encore augmentée en aval du catalyseur de réduction (K-NOx(akt)), celui-ci est reconnu comme de fonctionnement défectueux, et que dans le cas d'une concentration accrue en NH₃, le dispositif de dosage d'agent de réduction (16) est reconnu comme de fonctionnement défectueux.

3. Procédé selon la revendication 1 ou 2, **caractérisé en ce que** l'au moins un dispositif de saisie de la température appréhende la température du gaz d'échappement en amont du catalyseur d'oxydation (Takt-v), et **en ce qu'**un deuxième dispositif de saisie de la température appréhende la température en aval du catalyseur d'oxydation (Takt-n).

4. Procédé selon la revendication 3, **caractérisé en ce qu'**à partir des températures appréhendées en amont et en aval du catalyseur d'oxydation, une température de catalyseur moyenne (Takt(gew)) du catalyseur d'oxydation est déterminée.

5. Procédé selon l'une des revendications précédentes, **caractérisé en ce que** la température de référence spécifiable (Tref) est déterminée en fonction du point de fonctionnement.

6. Procédé selon l'une des revendications précédentes, **caractérisé en ce que** la première valeur de contrôle (KW1) et la deuxième valeur de contrôle (KW2) peuvent prendre la même valeur ou des valeurs différentes.

7. Procédé selon l'une des revendications précédentes, **caractérisé en ce que** les deux points de fonctionnement (BP1 et BP2) peuvent définir le même domaine de fonctionnement de la machine à combustion interne ou des domaines différents.
